# EUROPÄISCHE PATENTSCHRIFT

(11) **EP 0 926 168 B1**
(45) Veröffentlichungstag und Bekanntmachung des Hinweises auf die Patenterteilung: **24.03.2004**
(21) Anmeldenummer: 98123796.9
(22) Anmeldetag: 15.12.1998
(51) Int. Cl.: C10L 1/18

(54) **Hydroxylgruppenhaltige Ethylencopolymere enthaltende Brennstofföle**
Fuel oils comprising ethylene copolymers having hydroxyl groups
Huiles combustibles comprenant des copolymères d'éthylène ayant des groupements hydroxyles

(30) Priorität: 24.12.1997 DE 19757830
(43) Veröffentlichungstag der Anmeldung: 30.06.1999
(73) Patentinhaber: Clariant GmbH, 65929 Frankfurt am Main (DE)
(72) Erfinder: Krull, Matthias Dr., 46147 Oberhausen (DE); Kupetz, Markus, 46539 Dinslaken (DE); Wildfang, Raimund, 46147 Oberhausen (DE)

(56) Entgegenhaltungen:
- EP-A- 0 108 240
- EP-A- 0 209 299
- EP-A- 0 216 210
- EP-A- 0 220 611
- EP-A- 0 538 033
- EP-A- 0 810 247
- EP-A- 0 866 079
- WO-A-97/42236
- DE-A- 19 624 861
- US-A- 3 284 415
- US-A- 3 494 897
- US-A- 3 915 668
- US-A- 4 155 719
- US-A- 4 726 811
- US-A- 5 548 019

## Beschreibung

Die vorliegende Erfindung betrifft Brennstofföle, welche öllösliche hydroxylgruppenhaltige Copolymere umfassen, und die eine verbesserte Schmierwirkung aufweisen.

Mineralöle und Mineralöldestillate, die als Brennstofföle verwendet werden, enthalten im allgemeinen 0,5 Gew.-% und mehr Schwefel, der bei der Verbrennung die Bildung von Schwefeldioxid verursacht. Um die daraus resultierenden Umweltbelastungen zu vermindern, wird der Schwefelgehalt von Brennstoffölen immer weiter abgesenkt. Die Dieseltreibstoffe betreffende Norm EN 590 schreibt in Deutschland zur Zeit einen maximalen Schwefelgehalt von 500 ppm vor. In Skandinavien kommen bereits Brennstofföle mit weniger als 200 ppm und in Ausnahmefällen mit weniger als 50 ppm Schwefel zur Anwendung. Diese Brennstofföle werden in der Regel dadurch hergestellt, dass man die aus dem Erdöl durch Destillation erhaltenen Fraktionen hydrierend raffiniert. Bei der Entschwefelung werden aber auch andere Substanzen entfernt, die den Brennstoffölen eine natürliche Schmierwirkung verleihen. Zu diesen Substanzen zählen unter anderem polyaromatische und polare Verbindungen.

Es hat sich nun aber gezeigt, dass die reibungs- und verschleißmindernden Eigenschaften von Brennstoffölen mit zunehmendem Entschwefelungsgrad schlechter werden. Oftmals sind diese Eigenschaften so mangelhaft, dass an den vom Kraftstoff geschmierten Materialien wie z.B. den Verteiler-Einspritzpumpen von Dieselmotoren schon nach kurzer Zeit mit Fraßerscheinungen gerechnet werden muss. Die mittlerweile in Skandinavien vorgenommene weitere Absenkung des 95 %-Destillationspunkts auf unter 370°C, teilweise auf unter 350°C oder unter 330°C verschärft diese Problematik weiter.

Im Stand der Technik sind daher Ansätze beschrieben, die eine Lösung dieses Problems darstellen sollen (sogenannte Lubricity-Additive).

EP-A-0 680 506 offenbart Ester aus Carbonsäuren mit 2 bis 50 Kohlenstoffatomen als Additive zur Verbesserung der Schmierwirkung von schwefelarmen Mitteldestillaten mit unter 0,5 Gew.-% S.

DD-126 090 offenbart schmierverbessernde Additive aus Copolymerisaten von Ethylen und ungesättigten Carbonsäureestern, vorzugsweise Vinylacetat, die den Kraftstoffen in Mengen von 0,01 bis 0,5 Gew.-% zugesetzt werden.

EP-A-0 764 198 offenbart Additive, die die Schmierwirkung von Brennstoffölen verbessern, und die polare Stickstoffverbindungen auf Basis von Alkylaminen oder Alkylammoniumsalzen mit Alkylresten von 8 bis 40 Kohlenstoffatomen enthalten.

DE-A-15 94 417 offenbart Zusätze zur Verbesserung der Schmierwirkung oleophiler Flüssigkeiten, die Ester aus Glykolen und Dicarbonsäuren mit mindestens 11 Kohlenstoffatomen enthalten.

EP-A-0 635 558 offenbart Dieselöle mit Schwefelgehalten unter 0,2 Gew.-% und Arornatengehalten unter 30 Gew.-%. Diese Dieselöle werden mit 100 bis 10.000 ppm C₁-C₅-Alkylestern von ungesättigten geradkettigen C₁₂-C₂₂-Fettsäuren, die von Ölsaaten abstammen, additiviert.

EP-A-0 074 208 offenbart Mittel- und Schwerdestillate, die mit Copolymeren aus Ethylen und oxalkylierten Acrylaten oder Ethylen und Vinylestern gesättigter und ungesättigter Carbonsäuren additiviert sind.

Auch sind Copolymere, welche Hydroxylgruppen enthalten, im Stand der Technik beschrieben.

US-4 155 719 offenbart Ölzusammensetzungen, welche ein Rückstandsöl und ein Terpolymer aus Ethylen, Vinylacetat und alkoxylierter Acrylsäure enthalten, und verbesserte Kaltfließeigenschaften zeigen.

US-3 915 668 offenbart Ölzusammensetzungen aus einem Roh- oder Rückstandsöl und einem Terpolymer aus Ethylen, einem Vinylester und einem Dialkylvinylcarbinol, die verbesserte Kaltfließeigenschaften aufweisen.

US-4 726 811 offenbart Ölzusammensetzungen, welche als pour point depressant ein Terpolymer aus einem Vinylester, Vinylalkohol und Ethylen enthalten.

EP-A-0 538 033 offenbart Schmelzkleber, die Polymere aus Hydroxyacrylaten und mindestens einem weiteren Comonomer ausgewählt aus Vinylestern, Allylestern, Acrylsäure oder Methacrylsäure bzw. deren Ester enthalten.

EP-A-0 209 299 offenbart eine Isolationsmaterial für elektrische Leiter, bestehend aus einem Copolymer, welches Struktureinheiten von Ethylen und einem Hydroxylgruppen enthaltenden (Meth)Acrylsäureester enthält.

EP-A-0 810 247 offenbart Klebstoffe, weiche Copolymere aus Ethylen und mindestens einem ungesättigten Carbonsäureester mit Hydroxylgruppen enthalten.

US-3 284 415 offenbart Copolymere aus Ethylen und Hydroxyalkylacrylaten, die zur Herstellung von Polyurethanschäumen verwendet werden können.

EP-A-0 216 210 offenbart eine wässrige Haftkleberdispersion, deren Polymerisat aus 10 - 45 Gew.-% Ethylen, 0 - 25 Gew.-% Alkylacrylaten, 40 - 89 Gew.-%. Vinylestern, 0,5 - 4 Gew.-% ungesättigter Carbonsäure, 0,5 bis 10 Gew.-% Hydroxyalkylfunktionellen Comonomeren und 0 - 10 Gew.-% weiteren einfach oder mehrfach ethylenisch ungesättigten Comonomeren durch Emulsionspolymerisation hergestellt worden ist und sich durch erhöhte Wärmebeständigkeit der Verklebung auszeichnet.

EP-A-0 108 240 offenbart Terpolymerisate des Ethylens, die auf 100 Mol Ethylen 0,33 bis 1,76 Mol eines mit Ethylen copolymerisierbaren Comonomeren, welches Hydroxylgruppen enthalten kann, und 0,11 bis 0,59 Mol eines mit Ethylen copolymerisierbaren Comonomeren, welches ein (Meth)Acrylsäureester oder -amid ist, enthalten, und die zur Herstellung von Folien verwendet werden können.

WO-97/42236 offenbart ein Copolymer aus Ethylen und 5-Hexen-1-ol.

EP-A-0 220 611 offenbart Copolymere aus Ethylen und einem Acrylsäure-Fettalkoholalkoxylatester, und deren Verwendung als Kaltfließverbesserer für Erdöle.

US-5 548 019 offenbart ein Copolymer aus Ethylen, 6,6-Dimethylheptanvinylsäure, Crotonsäure und Hydroxybutylvinylether und dessen Verwendung als wasserlösliche Beschichtungsmasse.

US-3 494 897 offenbart ein Copolymer bestehend aus Ethylen und 5-Hydroxymethylbicyclo[2.2.1]hept-2-en und dessen Verwendung als Überzugsmasse.

EP-0 866 079 offenbart ein Copolymer bestehend aus Ethylen und Vinyl-4-hydroxybutylether und dessen Verwendung als Isoliermaterial für elektrische Leiter.

Aufgabe der vorliegenden Erfindung war es, Additive zu finden, die in weitgehend von Schwefel und aromatischen Verbindungen befreiten Mitteldestillaten zu einer Verbesserung der Schmierwirkung führen. Gleichzeitig sollen diese Additive auch die Kaltließeigenschaften dieser Mitteldestillate günstig beeinflussen.

Überraschenderweise wurde gefunden, dass Copolymere aus Ethylen und ethylenisch ungesättigten Verbindungen, die eine oder mehrere Hydroxylgruppen tragen, den mit ihnen additivierten Brennstoffölen die geforderten Eigenschaften verleihen.

Gegenstand der Erfindung sind Brennstofföle, enthaltend Mitteldestillate mit maximal 200 ppm Schwefel gehalt und mindestens ein Copolymerisat aus Ethylen und wenigstens einem weiteren olefinisch ungesättigten Comonomer, das eine oder mehrere Hydroxylgruppen enthält.

Bei den olefinisch ungesättigten Verbindungen, die die weiteren Comonomere ausmachen, handelt es sich vorzugsweise um Vinylester, Acrylester, Methacrylester, Alkylvinylether und/oder Alkene, die Hydroxyalkyl-, Hydroxyalkenyl-, Hydroxycycloalkyl- oder Hydroxyarylreste tragen. Diese Reste enthalten wenigstens eine Hydroxylgruppe, die an einer beliebigen Stelle des Restes stehen kann, bevorzugt aber am Kettenende (ω-Stellung) steht.

Bei den Vinylestern handelt es sich vorzugsweise um solche der Formel 1

CH₂ = CH - OCOR¹ (1)

worin R¹ C₁-C₃₀-Hydroxyalkyl, vorzugsweise C₁-C₁₂-Hydroxyalkyl, speziell C₂-C₆-Hydroxyalkyl sowie die entsprechenden Hydroxyoxalkylreste bedeutet. Geeignete Vinylester umfassen 2-Hydroxyethyivinylester, 2-Hydroxypropylvinylester, 3-Hydroxypropylvinylester und 4-Hydroxybutylvinylester.

Bei den Acrylestem handelt es sich vorzugsweise um solche der Formel 2

CH₂ = CR² - COOR³ (2)

worin R² Wasserstoff oder Methyl und R³ C₁-C₃₀-Hydroxyalkyl, vorzugsweise C₁-C₁₂-Hydroxyalkyl, speziell C₂-C₆-Hydroxyalkyl sowie die entsprechenden Hydroxyoxalkylreste bedeutet. Geeignete Acrylester umfassen Hydroxyethylacrylat, Hydroxyethylmethacrylat, 2-Hydroxypropylacrylat, 3-Hydroxypropylacrylat, 3-Hydroxypropylmethacrylat, Hydroxyisopropylacrylat, 4-Hydroxybutylacrylat und Glycerinmonoacrylat.

Bei den Alkylvinylethern handelt es sich vorzugsweise um Verbindungen der Formel 3

CH₂ = CH - OR⁴ (3)

worin R⁴ C₁-C₃₀-Hydroxyalkyl, vorzugsweise C₁-C₁₂-Hydroxyalkyl, speziell C₂-C₆-Hydroxyalkyl sowie die entsprechenden Hydroxyoxalkylreste bedeutet. Geeignete Alkylvinylether umfassen 2-Hydroxyethylvinylether, Hydroxypropylvinylether, Hexandiolmonovinylether, 4-Hydroxybutylvinylether, Diethylenglykolmonovinylether und Cyclohexandimethanolmonovinylether.

Bei den Alkenen handelt es sich vorzugsweise um einfach ungesättigte Hydroxykohlenwasserstoffe mit 3 bis 30 Kohlenstoffatomen, insbesondere 4 bis 16 Kohlenstoffatomen und speziell 5 bis 12 Kohlenstoffatomen. Geeignete Alkene umfassen Dimethylvinylcarbinol (= 2-Methyl-3-buten-2-ol), Allyloxypropandiol, 2-Buten-1,4-diol, 1-Buten-3-ol, 3-Buten-1-ol, 2-Buten-1-ol, 1-Penten-3-ol, 1-Penten-4-ol, 2-Methyl-3-buten-1-ol, 1-Hexen-3-ol, 5-Hexen-1-ol und 7-Octen-1,2-diol. In einer weiteren bevorzugten Ausführungsform können die Kohlenstoffketten der Alkene durch Sauerstoffatome unterbrochen sein.

Der molare Anteil an hydroxyfunktionalisierten Comonomeren am Copolymeren beträgt 0,5 bis 15 %, insbesondere 1 bis 12 %. Die OH-Zahl der Copolymeren beträgt vorzugsweise zwischen 1 und 800, insbesondere zwischen 5 und 500 und speziell zwischen 10 und 300 mg KOH/g Polymer.

Die Schmetzviskositäten der erfindungsgemäßen Copolymere bei 140°C liegen zwischen 10 und 10.000 mPas, insbesondere zwischen 10 und 1000 mPas und speziell zwischen 15 und 500 mPas.

Die erfindungsgemäßen Copolymere enthalten neben Ethylen mindestens ein Comonomeres mit Hydroxylgruppen. Sie können noch weitere, beispielsweise ein, zwei oder drei weitere olefinisch ungesättigte Comonomere enthalten. Solche olefinisch ungesättigten Comonomere sind beispielsweise Vinylester, Acrylsäure, Methacrylsäure, Acrylester, Methacrylester, Vinylether oder Olefine. Besonders bevorzugte Vinylester sind Vinylacetat, Vinylpropionat und Vinylester von Neocarbonsäuren mit 8, 9, 10, 11 oder 12 Kohlenstoffatomen. Besonders bevorzugte Acryl- und Methacrylester sind solche mit Alkoholen mit 1 bis 20 Kohlenstoffatomen, insbesondere von Methanol, Ethanol, Propanol, n-Butanol, iso-Butanol und tert.-Butanol. Besonders bevorzugte Olefine sind solche mit 3 bis 10 Kohlenstoffatomen, speziell Propen, Isobutylen, Diisobutylen, Norbornen, 4-Methylpenten-1 und Hexen. Besonders bevorzugt sind Terpolymere aus Ethylen, einem hydroxyfunktionalisierten Comonomer und entweder Vinylacetat oder einem Vinylester einer Neocarbonsäure mit 8 bis 12 Kohlenstoffatomen. Enthalten die Copolymeren ein weiteres Comonomer, so beträgt dessen molarer Anteil vorzugsweise bis zu 15 %, insbesondere bis zu 12 %.

Die Copolymerisation der Comonomeren erfolgt nach bekannten Verfahren (vgl. hierzu z.B. Ullmanns Encyclopädie der Technischen Chemie, 4. Auflage, Bd. 19, Seiten 169 bis 178). Geeignet sind die Polymerisation in Lösung, in Suspension, in der Gasphase und die Hochdruckmassepolymerisation. Vorzugsweise wendet man die Hochdruckmassepolymerisation an, die bei Drücken von 50 bis 400 MPa, vorzugsweise 100 bis 300 MPa und Temperaturen von 50 bis 350°C, vorzugsweise 100 bis 300°C, durchgeführt wird. Die Reaktion der Comonomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, . Dibenzoylperoxid, Bis(2-ethylhexyl)-peroxidicarbonat, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methylbutyronitril). Die Initiatoren werden einzeln oder als Gemisch aus zwei oder mehr Substanzen in Mengen von 0,01 bis 20 Gew.-%, vorzugsweise 0,05 bis 10 Gew.-%, bezogen auf das Comonomerengemisch, eingesetzt.

Die gewünschte Schmelzviskosität der Copolymerisate wird bei gegebener Zusammensetzung des Comonomerengemisches durch Variation der Reaktionsparameter Druck und Temperatur und gegebenenfalls durch Zusatz von Moderatoren eingestellt. Als Moderatoren haben sich Wasserstoff, gesättigte oder ungesättigte Kohlenwasserstoffe, z.B. Propan, Aldehyde, z.B. Propionaldehyd, n-Butyraldehyd oder Isobutyraldehyd, Ketone, z.B. Aceton, Methylethylketon, Methylisobutylketon, Cyclohexanon oder Alkohole, z.B. Butanol, bewährt. In Abhängigkeit von der angestrebten Viskosität werden die Moderatoren in Mengen bis zu 20 Gew.-%, vorzugsweise 0,05 bis 10 Gew.-%, bezogen auf das Comonomerengemisch, angewandt.

Die Hochdruckmassepolymerisation wird in bekannten Hochdruckreaktoren, z.B. Autoklaven oder Rohrreaktoren diskontinuierlich oder kontinuierlich durchgeführt, besonders bewährt haben sich Rohrreaktoren. Lösungsmittel wie aliphatische Kohlenwasserstoffe oder Kohlenwasserstoffgemische, Benzol oder Toluol, können im Reaktionsgemisch enthalten sein, wenngleich sich die lösungsmittelfreie Arbeitsweise besonders bewährt hat. Nach einer bevorzugten Ausführungsform der Polymerisation wird das Gemisch aus den Comonomeren, dem Initiator und, sofern eingesetzt, dem Moderator, einem Rohrreaktor über den Reaktoreingang sowie über einen oder mehrere Seitenäste zugeführt. Hierbei können die Comonomerenströme unterschiedlich zusammengesetzt sein (EP-B-0 271 738).

Zur erfindungsgemäßen Verbesserung der Schmierwirkung von Ölen sind ebenfalls Copolymere, enthaltend Struktureinheiten, die sich aus Ethylen und Vinylalkohol ableiten, geeignet. Copolymere dieser Art können hergestellt werden, indem man ein Copolymer, enthaltend Struktureinheiten, die sich von Ethylen und Vinylacetat ableiten, teilweise oder vollständig hydrolysiert.

Desgleichen können Copolymere, die sich von Ethylen und Glycidylresten tragenden Monomeren, wie z.B. Glycidyl(meth)acrylat oder Glycidylallylether ableiten, nach Hydrolyse mit Wasser, Alkoholen, wie Methanol oder Glykol bzw. Aminen, wie z.B. Ammoniak, Methylamin, Ethanolamin oder Diethanolamin erfindungsgemäß verwendet werden.

Weiterhin lässt sich die Schmierwirkung von Ölen in erfindungsgemäßer Weise dadurch verbessern, dass man ihnen Ethylencopolymere zusetzt, die oxalkylierte Säuregruppen enthalten. Dazu geeignete Ethylencopolymere sind beispielsweise solche mit Acrylsäure, Methacrylsäure, Itaconsäure, Fumarsäure, Maleinsäure oder Maleinsäureanhydrid. Zur Herstellung eines die Schmierwirkung von Ölen verbessernden Additivs werden diese säuregruppenhaltigen Copolymere an den Säuregruppen mit C₁- bis C₁₀-Alkylenoxiden oxalkyliert. Bevorzugte Alkylenoxide sind Ethylenoxid, Propylenoxid und Butylenoxid. Die Oxalkylierung erfolgt vorzugsweise mit einem Einsatz von 0,5 bis 10 mol, insbesondere 1 bis 5 mol und speziell 1 bis 2 mol Alkylenoxid pro mol Säuregruppe.

Die erfindungsgemäßen Copolymerisate werden Mineralölen oder Mineralöldestillaten in Form von Lösungen oder Dispersionen die 10 bis 90 Gew.-%, bevorzugt 20 - 80 Gew.-%, der Polymerisate enthalten, zugesetzt. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ®Shellsol AB, ®Solvesso 150, ®Solvesso 200, ®Exxsol-, ®ISOPAR- und Shellsol D-Typen. Durch die Copolymerisate in ihren Schmier- und/oder Kaltfließeigenschaften verbesserte Mineralöle oder Mineralöldestillate enthalten 0,001 bis 2, vorzugsweise 0,005 bis 0,5 Gew.-% Copolymerisat, bezogen auf das Destillat.

Die erfindungsgemäßen Copolymerisate können weiterhin in Form von Mischungen verwendet werden, die aus Copolymeren der beanspruchten Art, jedoch unterschiedlicher qualitativer und/oder quantitativer Zusammensetzung und/oder unterschiedlicher (bei 140°C gemessener) Viskosität bestehen. Das Mischungsverhältnis (in Gewichtsteilen) der Copolymeren kann über einen weiten Bereich variiert werden und z.B. 20:1 bis 1:20, vorzugsweise 10:1 bis 1:10 betragen. Auf diesem Wege lassen sich die Additive gezielt individuellen Anforderungen anpassen.

Zur Herstellung von Additivpaketen für spezielle Problemlösungen können die erfindungsgemäßen Copolymerisate auch zusammen mit einem oder mehreren öllöslichen Co-Additiven eingesetzt werden. Beispiele solcher Co-Additive sind Kammpolymere sowie öllösliche Amphiphile.

In einer Ausführungsform der Erfindung werden die erfindungsgemäßen Copolymerisate zusammen mit Kammpolymeren verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers-Structure and Properties; N.A. Platé and V.P. Shibaev, J. Polym. Sci. Macromolecular Revs. 1974, 8,117 ff). Beispiele für geeignete Kammpolymere sind z.B. Fumarat/Vinylacetat-Copolymere (vgl. EP 0 153 176 A1), Copolymere aus einem C₆- bis C₂₄-α-Olefin und einem N-C₆- bis C₂₂-Alkylmaleinsäureimid (vgl. EP 0 320 766), ferner veresterte Olefin/Maleinsäureanhydrid-Copolymere, Polymere und Copolymere von α-Olefinen und veresterte Copolymere von Styrol und Maleinsäureanhydrid.

Beispielsweise können Kammpolymere durch die Formel 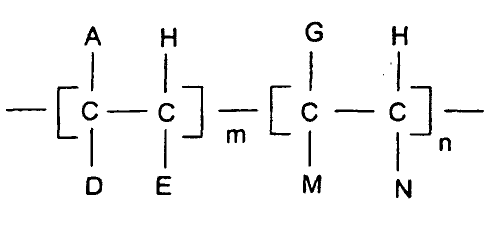 beschrieben werden. Darin bedeuten
- A: R', COOR', OCOR', R"-COOR' oder OR';
- D: H, CH₃, A oder R";
- E: H oder A;
- G: H, R", R"-COOR', einen Arylrest oder einen heterocyclischen Rest;
- M: H, COOR", OCOR", OR" oder COOH;
- N: H, R", COOR", OCOR", COOH oder einen Arylrest;
- R': eine Kohlenwasserstoffkette mit 8-50 Kohlenstoffatomen;
- R": eine Kohlenwasserstoffkette mit 1 bis 10 Kohlenstoffatomen;
- m: eine Zahl zwischen 0,4 und 1,0; und
- n: eine Zahl zwischen 0 und 0,6.

Das Mischungsverhältnis (in Gewichtsteilen) der erfindungsgemäß hergestellten Terpolymerisate mit Kammpolymeren beträgt 1:10 bis 20:1, vorzugsweise 1:1 bis 10:1.

Zur Optimierung der Schmierwirkung können die erfindungsgemäßen Copolymeren in Mischung mit weiteren Lubricity-Additiven eingesetzt werden. Als Lubricity-Additive haben sich vorzugsweise öllösliche Amphiphile, wie z.B. Fettalkohole, Fettsäuren und Dimerfettsäuren sowie deren Ester und Partialester mit Glykolen (gemäß DE-A-15 94 417), Polyolen wie Glycerin (gemäß EP-A-0 680 506, EP-A-0 739 970) oder Hydroxyaminen (gemäß EP-A-0 764 198) bewährt.

Die erfindungsgemäßen Additive sind geeignet, die Schmier- und Kaltfließeigenschaften von tierischen, pflanzlichen oder mineralischen Ölen sowie von alkanolhaltigen Kraftstoffen zu verbessern. Darüber hinaus verzögern bzw. verhindern sie eine Sedimentation ausgefallener Paraffinkristalle. Sie sind für die Verwendung in Mitteldestillaten besonders gut geeignet. Als Mitteldestillate bezeichnet man solche Mineralöle, die durch Destillation von Rohöl gewonnen werden und im Bereich von 120 bis 450°C sieden, beispielsweise Kerosin, Jet-Fuel, Diesel und Heizöl. Die erfindungsgemäßen Copolymere werden in solchen Mitteldestillaten verwendet, die weniger als 200 ppm Schwefel und vorzugsweise weniger als 50 ppm Schwefel enthalten. Es handelt sich dabei im allgemeinen um solche Mitteldestillate, die einer hydrierenden Raffination unterworfen wurden, und die daher nur geringe Anteile an polyaromatischen und polaren Verbindungen enthalten, die ihnen eine natürliche Schmierwirkung verleihen. Die erfindungsgemäßen Copolymere werden weiterhin vorzugsweise in solchen Mitteldestillaten verwendet, die 95 %-Destillationspunkte unter 370°C, insbesondere 350°C und in Spezialfällen unter 330°C aufweisen.

Die Polymerisate können allein oder auch zusammen mit anderen Additiven verwendet werden, z.B. mit anderen Stockpunkterniedrigern oder Entwachsungshilfsmitteln, mit Korrosionsinhibitoren, Antioxidantien, Detergenz-Additive, Cetanzahlverbesserer, Schlamminhibitoren, Dehazern und Zusätzen zur Erniedrigung des Cloud-Points.

Die Wirksamkeit der erfindungsgemäßen Polymerisate als Kaltfließverbesserer wird durch die nachfolgenden Beispiele näher erläutert.

### Beispiele

### Herstellvorschrift 1:

Die Herstellung der Polymeren 1 bis 13 erfolgte wie folgt:
Ethylen und die Comonomeren werden unter Zusatz von Propionaldehyd als Molekulargewichtsregler (Moderator), in einem Hochdruckautoklaven polymerisiert. Hierzu wird das Monomerengemisch, dem als Initiator Bis(2-ethylhexyl)-peroxidicarbonat gelöst in Testbenzin (5 gew.-%ige Lösung) zugesetzt worden ist, unter Reaktionsdruck von 150 MPa in den Reaktor bei 185°C eingespeist. Die Verweilzeit der Reaktanden im Autoklaven beträgt ca. 120 Sekunden. In Tabelle 1a, 1b und 2 sind die Polymerisationsbedingungen, in Tabelle 3 die Eigenschaften der erhaltenen Terpolymere zusammengestellt.

**Tabelle 1a:**

| Herstellung von Terpolymerisaten gemäß Herstellvorschrift 1 | | | | | | |
|---|---|---|---|---|---|---|
| Polymer Nr. | Einsatz (Gew.-%) | | | Initiator (Gew.-ppm bez.auf Ethylen) | Moderator (Gew.-% bez.auf Monomere) | Ausbeute [Gew.-%] |
| | C₂H₄ | Comonomer | Comonomer | | | |
| 1 | 91,6 | 8,4 % HPA | - | 560 | 7,2 | 15 |
| 2 | 77,5 | 4,5 % HPA | 18 % VA | 375 | 5,9 | 14 |
| 3 | 75,6 | 7,4 % HPA | 17 % VA | 490 | 6,0 | 13 |
| 4 | 75,1 | 6,9 % HPA | 18 % VeoVa | 675 | 6,4 | 20 |
| 5 | 90,7 | 9,3 % HPMA | - | 1315 | 7,5 | 20 |
| 6 | 77,1 | 4,9 % HPMA | 18 % VA | 900 | 5,9 | 18 |
| 7 | 75,2 | 6,8 % HPMA | 18 % VA | 1315 | 6,0 | 20 |
| 8 | 91,2 | 8,8 % HEMA | - | 1880 | 7,8 | 20 |
| 9 | 91,2 | 8,8 % HEMA | - | 2255 | 10,0 | 20 |
| 10 | 77,7 | 4,6 % HEMA | 18 % VA | 1600 | 6,6 | 18 |
| 11 | 75,0 | 7,6 % HEMA | 17 % VA | 2670 | 6,3 | 20 |
| 12 | 59,0 | 13 % DMVC | 28 % VA | 1540 | 4,8 | 13 |
| 13 | 66,0 | 4 % DMVC | 30 % VA | 970 | 5,3 | 11 |
| HPA = Hydroxypropylacrylat | | | | | | |
| HPMA= Hydroxypropylmethacrylat | | | | | | |
| HEMA= Hydroxyethylacrylat | | | | | | |
| VA = Vinylacetat, | | | | | | |
| VeoVa = Neodecansäurevinylester | | | | | | |
| DMVC = Dimethylvinylcarbinol | | | | | | |

### Beispiele 14 bis 17

Gemäß Herstellvorschrift 1 wurde bei einer Temperatur von 220°C unter Einsatz von tert.-Butylperoxypivalat polymerisiert.

**Tabelle 1b:**

| Herstellung von Terpolymeren gemäß Herstellvorschrift 1 | | | | | | |
|---|---|---|---|---|---|---|
| Polymer Nr. | Einsatz (Gew.-%) | | | Initiator (Gew.-ppm bez.auf Ethylen) | Moderator (Gew.-% bez.auf Monomere) | Ausbeute [Gew.-%] |
| | C₂H₄ | Comonomer | Termonomer | | | |
| 14 | 80,1 | 1,9 % HEMA | 18,4 % VA | 375 | 6,3 | 20 |
| 15 | 67,4 | 1,6 % HEMA | 31,1 % VA | 330 | 6,1 | 20 |
| Vergleich 16 | 56,8 | 1,2 % HEMA | 42,1 % VA | 470 | 5,4 | 21 |
| 17 | 66,2 | 2,8 % HEMA | 31 % VA | 520 | 4,8 | 22 |
| HEMA= Hydroxyethylmethacrylat | | | | | | |
| VA = Vinylacetat | | | | | | |

### Herstellvorschrift 2:

Hydroxyfunktionelles Comonomer, Moderator, Initiatorlösung (Di-tert.-Butylperoxid in isoparaffinischem Lösemittel) und gegebenenfalls Vinylester werden in einem auf 150°C erwärmten Autoklaven vorgelegt. Anschließend wird Ethylen bis zu einem Druck von 160 MPa aufgedrückt. Sobald der Druck auf 140 MPa abfällt, wird erneut Ethylen aufgedrückt. Dieser Vorgang wird sechsmal wiederholt. Nach insgesamt 120 min Reaktionszeit wird das Reaktionsprodukt aus dem Reaktor ausgetragen.

**Tabelle 2:**

| Herstellung von Terpolymerisaten gemäß Herstellvorschrift 2 | | | | | |
|---|---|---|---|---|---|
| Polymer | Einsatz | | Initiator [g] | Moderator | Ausbeute [g] |
| | Comonomer 1 | Comonomer 2 | | | |
| A | 70 g GMA | 120 g VA | 0,5 | 30 g | 260 |
| B | 110 g AOPD | - | 6 | 20 g | 214 |
| C | 155 g DMVC | 120 g VA | 0,75 | 15 g | 240 |
| DMVC= Dimethylvinylcarbinol | | | | | |
| GMA = Glycerinmonoacrylat | | | | | |
| AOPD= Allyloxypropandiol | | | | | |

### Charakterisierung der Polymerisate

Der Vinylacetatgehalt wird durch Pyrolyse des Polymerisats bestimmt. Hierzu werden 100 mg des Polymerisats mit 200 mg reinem Polyethylen in einem Pyrolysekolben 5 Minuten bei 450°C in einem geschlossenen System unter Vakuum thermisch gespalten und die Spaltgase in einem 250 ml-Rundkolben aufgefangen. Das Spaltprodukt Essigsäure wird mit einer NaJ/KJO₃-Lösung umgesetzt und mit Na₂S₂O₃-Lösung das freiwerdende Jod titriert.

Die Bestimmung der hydroxyfunktionellen Comonomere erfolgt durch Bestimmung der OH-Zahl durch Umsetzung des Polymers mit überschüssigem Acetanhydrid und anschließender Titration der gebildeten Essigsäure mit KOH.

Die Bestimmung der Viskosität erfolgt gemäß ISO 3219 (B) mit einem Rotationsviskosimeter (Haake RV 20) mit Platte-Kegel-Meßsystem bei 140°C.

**Tabelle 3:**

| Charakterisierung der Terpolymerisate | | | |
|---|---|---|---|
| Beispiel Nr. | Vinylester | V₁₄₀ (mPas) | OH-Zahl |
| 1 | - | 138 | 145 |
| 2 | 14 % VA | 133 | 113 |
| 3 | 13 % VA | 200 | 132 |
| 4 | 11 % VeoVa | 135 | 133 |
| 5 | - | 118 | 145 |
| 6 | 12 % VA | 153 | 97 |
| 7 | 11 % VA | 170 | 115 |
| 8 | - | 149 | 159 |
| 9 | - | 77 | 152 |
| 10 | 12,9 % VA | 123 | 101 |
| 11 | 10,8 % VA | 177 | 130 |
| 12 | 24,7 % VA | 101 | 38 |
| 13 | 25,6 % VA | 92 | 24 |
| 14 | 13,3 % VA | 68 | 60 |
| 15 | 22,2 % VA | 77 | 38 |
| Vergleich 16 | 31,5 % VA | 92 | 25 |
| 17 | 22,3 % VA | 93 | 42 |
| A | 22,3 % VA | 97 | 86 |
| B | - | 48 | 102 |
| C | 28,3 % VA | 121 | 24 |

**Tabelle 4:**

| Charakterisierung der Testöle Die Bestimmung der Siedekenndaten erfolgt gemäß ASTM D-86, die Bestimmung des CFPP-Werts gemäß EN 116 und die Bestimmung des Cloud Points gemäß ISO 3015. | | | |
|---|---|---|---|
| | Testöl 1 | Testöl 2 | Testöl 3 |
| Siedebeginn [°C] | 195 | 165 | 169 |
| 20 % [°C] | 226 | 235 | 240 |
| 30 % [°C] | 232 | 256 | 259 |
| 90 % [°C] | 281 | 354 | 359 |
| 95 % [°C] | 300 | 369 | 377 |
| Cloud Point [°C] | - 30,5 | - 0,5 | 0 |
| CFPP [°C] | - 31 | - 3 | - 2 |
| S-Gehalt [ppm] | 14 | 160 | 171 |

### Schmierwirkung in Mitteldestillaten

Die Schmierwirkung der Additive wurde mittels eines HFRR-Geräts der Firme PCS Instruments an additivierten Ölen bei 60°C durchgeführt. Der High Frequency Reciprocating Rig Test (HFRR) ist beschrieben in D. Wei, H. Spikes, Wear, Vol. 111, No. 2, p. 217, 1986. Die Ergebnisse sind als Reibungskoeffizient und Wear Scar angegeben. Ein niedriger Reibungskoeffizient und ein niedriger Wear Scar zeigen eine gute Schmierwirkung. Als Vergleich wird ein handelsüblicher Fließverbesserer auf Basis eines Copolymerisats aus Ethylen und 30 Gew.-% Vinylacetat und einer Schmelzviskosität V₁₄₀ von 105 mPas eingesetzt.

**Tabelle 5:**

| Wear Scar in Testöl 1 | | | | |
|---|---|---|---|---|
| Beispiel | Additiv | Reibung | Av. Film [%] | Wear Scar [µm] |
| 1 | - | 0,62 | 19 | 620 |
| 2 | 500 ppm Polymer 1 | 0,14 | 96 | 233 |
| 3 | 250 ppm Polymer 1 | 0,25 | 47 | 470 |
| 4 | 500 ppm Polymer 2 | 0,13 | 96 | 228 |
| 5 | 500 ppm Polymer 3 | 0,13 | 93 | 260 |
| 6 | 500 ppm Polymer 4 | 0,12 | 96 | 240 |
| 7 | 250 ppm Polymer 4 | 0,18 | 75 | 343 |
| 8 | 250 ppm Polymer 5 | 0,17 | 78 | 333 |
| 9 | 250 ppm Polymer 6 | 0,17 | 83 | 308 |
| 10 | 250 ppm Polymer 7 | 0,18 | 82 | 325 |
| 11 | 250 ppm Polymer 9 | 0,16 | 88 | 258 |
| 12 | 250 ppm Polymer 10 | 0,17 | 90 | 278 |
| 13 | 250 ppm Polymer 11 | 0,18 | 89 | 263 |
| 14 | 250 ppm Polymer 12 | 0,18 | 74 | 408 |
| 15 | 250 ppm Polymer 13 | 0,16 | 84 | 275 |
| 16 | 125 ppm Polymer 14 | 0,21 | 81 | 380 |
| 17 | 250 ppm Polymer 15 | 0,17 | 92 | 260 |
| Vergleich 18 | 250 ppm Polymer 16 | 0,19 | 87 | 298 |
| 19 | 200 ppm Polymer 17 | 0,15 | 91 | 268 |
| 20 | 125 ppm Polymer 17 | 0,18 | 84 | 355 |
| 21 | 250 ppm Polymer A | 0,18 | 86 | 315 |
| 22 | 500 ppm Polymer B | 0,09 | 87 | 298 |
| 23 | 250 ppm Polymer C | 0,37 | 84 | 300 |
| 24 | 500 ppm EVA-Copolymer (Vergleich) | 0,31 | 9 | 619 |

**Tabelle 6:**

| CFPP-Wirksamkeit in Testöl 1 | | |
|---|---|---|
| Additiv | 100 ppm | 200 ppm |
| Polymer 13 | - 39 | - 39 |

**Tabelle 7:**

| CFPP-Wirksamkeit in Testöl 2 | | |
|---|---|---|
| Additiv | 200 ppm | 400 ppm |
| Polymer 2 | - 8 | - 12 |
| Polymer 4 | - 8 | - 8 |
| Polymer 10 | - 8 | - 11 |
| Polymer 13 | -14 | -16 |

**Tabelle 8:**

| CFPP-Synergismus in Testöl 3 | | |
|---|---|---|
| Additiv | 50 ppm | 200 ppm |
| Polymer 2 | - 9 | - 11 |
| Polymer 3 | - 7 | - 10 |
| Polymer 4 | - 8 | - 11 |

### Liste der verwendeten Handelsbezeichnungen

- Solvent Naphtha ®Shellsol AB ®Solvesso 150: aromatische Lösemittelgemische mit Siedebereich 180 bis 210°C
- ®Solvesso 200: aromatisches Lösemittelgemisch mit Siedebereich 230 bis 287°C
- ®Exxsol: Dearomatisierte Lösemittel in verschiedenen Siedebereichen, beispielsweise ®Exxsol D60: 187 bis 215°C
- ®ISOPAR (Exxon): isoparaffinische Lösemittelgemische in verschiedenen Siedebereichen, beispielsweise ®ISOPAR L: 190 bis 210°C
- ®Shellsol D: hauptsächlich aliphatische Lösemittelgemische in verschiedenen Siedebereichen

## Patentansprüche

1. Brennstofföl, enthaltend
A) ein Mitteldestillat mit maximal 200 ppm Schwefelgehalt und einem Siedebereich von 120 bis 450°C, und
B) 0,001 bis 2 Gew.-% eines Copolymerisats aus Ethylen und wenigstens einem weiteren olefinisch ungesättigten Comonomer, welches aus der Gruppe bestehend aus Vinylestem, Acrylestem, Methacrylestern, Alkylvinylethern und/oder Alkenen, die Hydroxyalkyl-, Hydroxyalkenyl-, Hydroxycycloalkyloder Hydroxyarylreste tragen, sowie Vinylalkohol, ausgewählt ist, und wobei der molare Anteil an hydroxyfunktionalisierten Comonomeren im Copolymeren zwischen 0,5 und 15 % liegt und das Copolymere eine Schmelzviskosität bei 140°C von 10 bis 10.000 mPas aufweist.

2. Brennstofföl nach Anspruch 1, **dadurch gekennzeichnet, daß** das olefinisch ungesättigte Comonomer der Formel 1 entspricht
CH₂ = CH - OCOR¹ (1)
worin R¹ C₁-C₃₀-Hydroxyalkyl, vorzugsweise C₁-C₁₂-Hydroxyalkyl, speziell C₂-C₆-Hydroxyalkyl bedeutet, und insbesondere 2-Hydroxyethylvinylester, 2-Hydroxypropylvinylester, 3-Hydroxypropylvinylester oder 4-Hydroxybutylvinylester darstellt.

3. Brennstofföl nach Anspruch 1 und/oder 2, **dadurch gekennzeichnet, daß** das olefinisch ungesättigte Comonomer der Formel 2 entspricht
CH₂ = CR² - COOR³ (2)
worin R² Wasserstoff oder Methyl und R³ C₁-C₃₀-Hydroxyalkyl, vorzugsweise C₁-C₁₂-Hydroxyalkyl, speziell C₂-C₆-Hydroxyalkyl bedeutet und insbesondere Hydroxyethylacrylat, Hydroxyethylmethacrylat, 2-Hydroxypropylacrylat, 3-Hydroxypropylacrylat, 3-Hydroxypropylmethacrylat, Hydroxyisopropylacrylat, 4-Hydroxybutylacrylat und Glycerinmonoacrylat darstellt.

4. Brennstofföl nach einem oder mehreren der Ansprüche 1 bis 3, **dadurch gekennzeichnet, daß** das olefinisch ungesättigte Comonomer der Formel 3 entspricht
CH₂ =CH - OR⁴ (3)
worin R⁴ C₁-C₃₀-Hydroxyalkyl, vorzugsweise C₁-C₁₂-Hydroxyalkyl, speziell C₂-C₆-Hydroxyalkyl bedeutet und insbesondere 2-Hydroxyethylvinylether, Hydroxypropylvinylether, Hexandiolmonovinylether, 4-Hydroxybutylvinylether, Diethylenglykolmonovinylether oder Cyclohexandimethanolmonovinylether darstellt.

5. Brennstofföl nach einem oder mehreren der Ansprüche 1 bis 4, **dadurch gekennzeichnet, daß** das olefinisch ungesättigte Comonomer ein Hydroxyalken mit 3 bis 30, insbesondere 4 bis 16, besonders bevorzugt 5 bis 12 Kohlenstoffatomen ist, wobei speziell Dimethylvinylcarbinol (= 2-Methyl-3-buten-2-ol), Allyloxypropandiol, 2-Buten-1,4-diol, 1-Buten-3-ol, 3-Buten-1-ol, 2-Buten-1-ol, 1-Penten-3-ol, 1-Penten-4-ol, 2-Methyl-3-buten-1-ol, 1-Hexen-3-ol, 5-Hexen-1-ol und 7-Octen-1,2-diol Verwendung finden.

6. Brennstofföl nach einem oder mehreren der Ansprüche 1 bis 5, **dadurch gekennzeichnet, daß** der molare Anteil des hydroxyfunktionalisierten Comonomeren am Copolymeren 1 bis 12 % beträgt.

7. Brennstofföl nach einem oder mehreren der Ansprüche 1 bis 6, **dadurch gekennzeichnet, dass** die Copolymere neben Ethylen und hydroxyfunktionalisierten Comonomeren bis zu 15 mol-% weiterer Comonomere enthält, ausgewählt aus der Gruppe Vinylester, Acrylsäure, Acrylester, Vinylether und/oder Alkene.

8. Brennstofföl nach einem oder mehreren der Ansprüche 1 bis 7, **dadurch gekennzeichnet, dass** das hydroxyfunktionalisierten Comonomere sich von einer oxalkylierten Carbonsäure ableitet.

## Claims

1. A fuel oil comprising
A) a middle distillate containing a maximum of 200 ppm of sulfur and having a boiling range of from 120 to 450°C, and
B) from 0.001 to 2% by weight of a copolymer of ethylene and at least one further olefinically unsaturated comonomer which is selected from the group consisting of vinyl esters, acrylates, methacrylates, alkyl vinyl ethers and/or alkenes carrying hydroxyalkyl, hydroxyalkenyl, hydroxycycloalkyl or hydroxyaryl radicals, and also vinyl alcohol, the molar proportion of hydroxy-functionalized comonomers in the copolymer being between 0.5 and 15% and the copolymer having a melt viscosity at 140°C of from 10 to 10,000 mPas.

2. A fuel oil as claimed in claim 1, wherein the olefinically unsaturated comonomer conforms to the formula 1
CH₂ = CH - OCOR¹ (1)
in which R¹ is C₁-C₃₀-hydroxyalkyl, preferably C₁-C₁₂-hydroxyalkyl, especially C₂-C₆-hydroxyalkyl, and is in particular a 2-hydroxyethyl vinyl ester, 2-hydroxypropyl vinyl ester, 3-hydroxypropyl vinyl ester or 4-hydroxybutyl vinyl ester.

3. A fuel oil as claimed in claim 1 and/or 2, wherein the olefinically unsaturated comonomer conforms to the formula 2
CH₂ = CR² - COOR³ (2)
in which R² is hydrogen or methyl, and R³ is C₁-C₃₀-hydroxyalkyl, preferably C₁-C₁₂-hydroxyalkyl, especially C₂-C₆-hydroxyalkyl, and is in particular hydroxyethyl acrylate, hydroxyethyl methacrylate, 2-hydroxypropyl acrylate, 3-hydroxypropyl acrylate, 3-hydroxypropyl methacrylate, hydroxyisopropyl acrylate, 4-hydroxybutyl acrylate or glycerol monoacrylate.

4. A fuel oil as claimed in one or more of claims 1 to 3, wherein the olefinically unsaturated comonomer conforms to the formula 3
CH₂ = CH - OR⁴ (3)
in which R⁴ is C₁-C₃₀-hydroxyalkyl, preferably C₁-C₁₂-hydroxyalkyl, especially C₂-C₆-hydroxyalkyl, and is in particular 2-hydroxyethyl vinyl ether, hydroxypropyl vinyl ether, hexanediol monovinyl ether, 4-hydroxybutyl vinyl ether, diethylene glycol monovinyl ether or cyclohexanedimethanol monovinyl ether.

5. A fuel oil as claimed in one or more of claims 1 to 4, wherein the olefinically unsaturated comonomer is a hydroxyalkene having 3 to 30, in particular 4 to 16, particularly preferably 5 to 12, carbon atoms, especially dimethylvinylcarbinol (= 2-methyl-3-buten-2-ol), allyloxypropanediol, 2-butene-1,4-diol, 1-buten-3-ol, 3-buten-1-ol, 2-buten-1-ol, 1-penten-3-ol, 1-penten-4-ol, 2-methyl-3-buten-1-ol, 1-hexen-3-ol, 5-hexen-1-ol and 7-octene-1,2-diol.

6. A fuel oil as claimed in one or more of claims 1 to 5, wherein the molar proportion of the hydroxy-functionalized comonomer in the copolymer is from 1 to 12%.

7. A fuel oil as claimed in one or more of claims 1 to 6, wherein, besides ethylene and hydroxy-functionalized comonomers, the copolymers contain up to 15 mol% of further comonomers selected from the group consisting of vinyl esters, acrylic acid, acrylic esters, vinyl ethers and/or alkenes.

8. The fuel oil as claimed in one or more of claims 1 to 7, wherein the hydroxy-functionalized comonomer is derived from an alkoxylated carboxylic acid.

## Revendications

1. Huile combustible renfermant
A) un distillat moyen avec une teneur maximale en soufre de 200 ppm et une plage d'ébullition de 120 à 450°C, et
B) de 0,001 à 2 % en masse d'un copolymère d'éthylène et d'au moins un autre comonomère à insaturation éthylénique, qui est pris dans le groupe comprenant des esters vinyliques, des esters acryliques, des esters méthacryliques, des éthers alkylvinyliques et/ou alcènes, qui portent des restes hydroxyalkyle, hydroxyalcényle, hydroxycycloalkyle ou hydroxyaryle, ainsi que l'alcool vinylique, et le taux molaire de comonomères à fonctionnalité hydroxy dans le copolymère est compris entre 0,5 à 15 % et le copolymère présente une viscosité de fusion à 140°C de 10 à 10000 mPas.

2. Huile combustible selon la revendication 1, **caractérisé en ce que** le comonomère à insaturation oléfinique répond à la formule I
CH₂=CH-OCOR¹ (1)
où R¹ représente un groupe hydroxyalkyle en C₁-C₃₀, de préférence hydroxyalkyle en C₁-C₁₂, en particulier hydroxyalkyle en C₂-C₆, et notamment l'ester 2-hydroxyéthylvinylique, l'ester 2-hydroxypropylvinylique, l'ester 3-hydroxypropylvinylique ou l'ester 4-hydroxybutylvinylique.

3. Huile combustible selon la revendication 1 et/ou 2, **caractérisé en ce que** le comonomère à insaturation oléfinique répond à la formule 2
CH₂=CR²-OCOR³ (2)
où R² représente un atome d'hydrogène ou un groupe méthyle et R³ représente un groupe hydroxyalkyle en C₁-C₃₀, de préférence hydroxyalkyle en C₁-C₁₂, en particulier hydroxyalkyle en C₂-C₆ et notamment l'acrylate d'hydroxyéthyle, le méthacrylate d'hydroxyéthyle, l'acrylate de 2-hydroxypropyle, l'acrylate de 3-hydroxypropyle, le méthacrylate de 3-hydroxypropyle, l'acrylate d'hydroxyisopropyle, l'acrylate de 4-hydroxybutyle ou le monoacrylate de glycérine.

4. Huile combustible selon une ou plusieurs des revendications 1 à 3, **caractérisée en ce que** le comonomère à insaturation oléfinique répond à la formule 3
CH₂=CH-OR⁴ (3)
où R⁴ représente un groupe hydroxyalkyle en C₁-C₃₀, de préférence hydroxyalkyle en C₁-C₁₂, en particulier hydroxyalkyle en C₂-C₆ et notamment en particulier l'éther 2-hydroxyéthylvinylique, l'éther hydroxypropylvinylique, l'éther hexanediolmonovinylique, l'éther 4-hydroxybutylvinylique, l'éther diéthylèneglycol-monovinylique ou l'éther cyclohexanediméthanolmonovinylique.

5. Huile combustible selon une ou plusieurs des revendications 1 à 4, **caractérisée en ce que** le comonomère à insaturation oléfinique est un hydroxy-alcène présentant 3 à 30, en particulier 4 à 16, notamment de préférence 5 à 12 atomes de carbone, en utilisant tout spécialement le diméthylvinylcarbinol (= 2-méthyl-3-butén-2-ol), l'allyloxypropanediol, le 2-butène-1,4-diol, le 1-butén-3-ol, le 3-butén-1-ol, le 2-butén-1-ol, le 1-pentén-3-ol, le 1-pentén-4-ol, le 2-méthyl-3-butén-1-ol, le 1-hexén-3-ol, le 5-hexén-1-ol et le 7-octén-1,2-diol.

6. Huile combustible selon une ou plusieurs des revendications 1 à 5, **caractérisée en ce que** le taux molaire du comonomère à fonctionnalité hydroxy dans le copolymère est de 1 à 12 %.

7. Huile combustible selon une ou plusieurs des revendications 1 à 6, **caractérisée en ce que** le copolymère renferme, outre l'éthylène et le comonomère à fonctionnalité hydroxy, jusqu'à 15 % molaires d'autres comonomères, pris dans le groupe comprenant les esters vinyliques, l'acide acrylique, les esters acryliques, les éthers vinyliques et/ou alcènes.

8. Huile combustible selon une ou plusieurs des revendications 1 à 7, **caractérisée en ce que** le comonomère à fonctionnalité hydroxy dérive d'un acide carboxyliqe oxalkylé.
